# EUROPEAN PATENT APPLICATION

(11) **EP 2 961 079 A1**
(43) Date of publication of application: **30.12.2015**
(21) Application number: 15171293.2
(22) Date of filing: 10.06.2015
(51) Int. Cl.: H04B 5/00, H04B 5/02

(54) **WIRELESS COMMUNICATION APPARATUS AND WIRELESS COMMUNICATION METHOD**

(30) Priority: 26.06.2014 JP 2014131359
(71) Applicant: CASIO COMPUTER CO., LTD., Shibuya-ku, Tokyo 151-8543 (JP)
(72) Inventor: KAWAHARA, Kazuma, Hamura-shi, Tokyo 205-8555 (JP); YOSHIDA, Toshihiko, Hamura-shi, Tokyo 205-8555 (JP); TSUTSUMI, Katsunori, Hamura-shi, Tokyo 205-8555 (JP)
(74) Representative: Grünecker Patent- und Rechtsanwälte PartG mbB

(57) **Abstract**

An embodiment of the present invention provides a wireless communication apparatus which can automatically switch to an operation mode corresponding to a communication target. The wireless communication apparatus 100 detects a communication target 200 near to the wireless communication apparatus 100. It determines whether or not the detected communication target 200 is capable of P2P communication with the wireless communication apparatus 100. In the case of determining that the communication target 200 is capable of P2P communication, the wireless communication apparatus 100 determines that the communication target 200 is a mobile terminal 210 and switches the operation mode to a P2P mode to establish P2P communication with the mobile terminal 210. In the case of determining that the communication target 200 is not capable of P2P communication, the wireless communication apparatus 100 determines that the communication target 200 is a contactless IC card 220 and switches the operation mode to a reader/writer mode to read/write information from/to the contactless IC card 220.

## Description

### BACKGROUND OF THE INVENTION

### 1. Field of the Invention

The present invention relates to a wireless communication apparatus for executing non-contact communication with a communication target and a wireless communication method.

### 2. Description of the Related Art

Conventionally, there has been disclosed a technology of switching between reading/writing of information from/to an information providing device by a button prepared in a mobile terminal as a proximity wireless communication technology (for example, Japanese Patent Application Laid-Open Publication No. 2005-45557 published on February 17, 2005). More specifically, a user's mobile terminal can read out information on a television program ("program information") by bringing the mobile terminal close to a poster having a memory device in which the program information is stored while pressing a button for reading. Further, the user can transmit program information to a television by bringing the mobile terminal close to the television while pressing a button for writing.

As the user recognizes a communication target which will communicate with the mobile terminal in advance according to the technology disclosed in Japanese Patent Application Laid-Open Publication No. 2005-45557, the user can switch an operation mode of the mobile terminal between reading and writing modes by the buttons prepared in the mobile terminal. However, in the case that the user cannot recognize the communication target in advance, it is nearly impossible to switch the operation mode to a proper mode corresponding to the communication target. Further, it requires the user's efforts to manually switch the operation mode of the mobile terminal after the user recognizes the communication target.

### SUMMARY OF THE INVENTION

The present invention was made in light of the problems mentioned above, and an object of the present invention is to automatically switch to an operation mode corresponding to a communication target.

In order to achieve the above object, an embodiment of the present invention provides a wireless communication apparatus for executing wireless communication with a communication target which includes a detecting means for detecting the communication target which is near to the wireless communication apparatus, a determining means for determining the type of the communication target detected by the detecting means, and a switching means for switching an operation mode of the wireless communication apparatus to a mode corresponding to communication with the communication target based on the determination by the determining means.

According to embodiments of the present invention, it is possible to automatically switch to an operation mode corresponding to a communication target.

### BRIEF DESCRIPTION OF THE DRAWINGS

The present invention will more sufficiently be understood by the following detailed description and the accompanying drawings, which are, however, exclusively for explanation and do not limit the scope of the present invention.

Here:
Fig. 1 shows an exemplary configuration of a wireless communication system according to an embodiment of the present invention.
Fig. 2 shows an exemplary functional configuration of a control unit of a wireless communication apparatus according to an embodiment of the present invention.
Fig. 3 is a flow chart for showing an example of a communication process executed by a wireless communication apparatus according to an embodiment of the present invention.

### DETAILED DESCRIPTION OF THE PREFERRED EMBODIMENT

Hereinafter, embodiments of the present invention will be described with reference to the accompanying drawings.

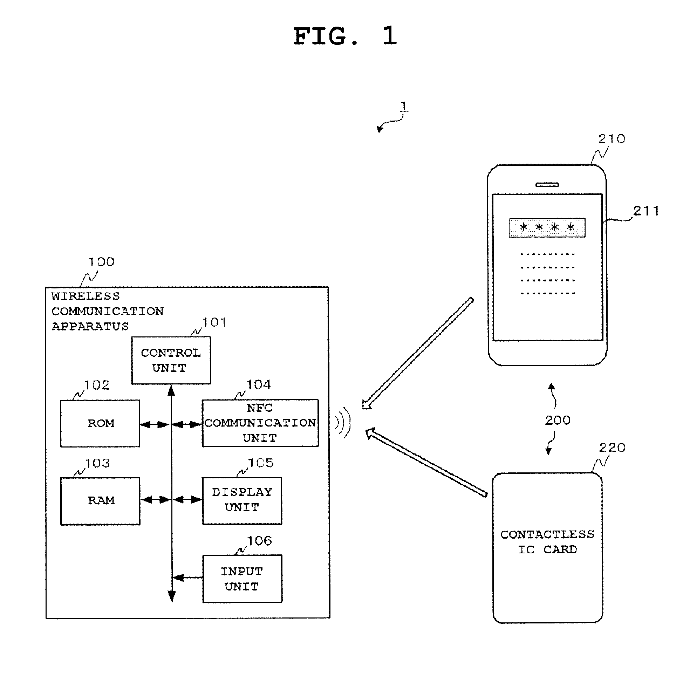

Fig. 1 shows an exemplary configuration of a wireless communication system 1 according to an embodiment of the present invention.

As illustrated in the exemplary configuration of Fig. 1, the wireless communication system 1 includes a wireless communication apparatus 100, and a mobile terminal 210 and a contactless IC (Integrated Circuit) card 220 which are communication targets 200 of the wireless communication apparatus 100. In the wireless communication system 1, the wireless communication apparatus 100 wirelessly communicates with the mobile terminal 210 and the contactless IC card 220 based on the NFC (Near Field Communication) communication technology.

The wireless communication apparatus 100 is an NFC device having an NFC communication function. Here, the NFC device operates in one mode switched among three operation modes, i.e. a card emulation mode, a P2P (Peer-to-Peer) mode, and a reader/writer mode. The card emulation mode is not necessarily required for the NFC device and is optionally included in the NFC device.

The P2P mode achieves one-to-one bidirectional communication between NFC devices, i.e. P2P communication. An NFC device operating in the P2P mode can directly exchange a variety of information with a different NFC device which is a communication target.

The reader/writer mode achieves reading/writing of information from/to the contactless IC card. An NFC device operating in the reader/writer mode reads/writes information from/to the contactless IC card or a different NFC device operating in the card emulation mode.

An NFC device operating in the card emulation mode functions as a contactless IC card. The NFC device operating in the card emulation mode can communicate with a different NFC device functioning as a reader/writer for a contactless IC card.

The wireless communication apparatus 100 of the present embodiment operates in one mode switched between the P2P mode and the reader/writer mode according to the type of the communication target 200. More specifically, in the case that the communication target 200 is the mobile terminal 210, the mobile communication apparatus 100 switches its operation mode to the P2P mode and operates in the P2P mode. In the case that the communication target 200 is the contactless IC card 220, the wireless communication apparatus 100 switches its operation mode to the reader/writer mode and operates in the reader/writer mode.

The mobile terminal 210 is an NFC device and can be realized by a portable information processing device such as a smart phone, a tablet, or a notebook computer, for example. The mobile terminal 210 includes an NFC communication unit (not shown in the present drawing) which enables communication using the NFC communication technology and a display unit 211, for example. In the case that a user holds the NFC communication unit of the mobile terminal 210 near to an NFC communication unit 104 of the wireless communication apparatus 100 which will be described later (in other words, the user brings the NFC communication unit of the mobile terminal 210 close to the NFC communication unit 104 of the wireless communication apparatus 100), P2P communication is achieved between the wireless communication apparatus 100 operating in the P2P mode and the mobile terminal 210. Further, the display unit 211 displays information which the mobile terminal 210 acquires from the wireless communication apparatus 100 by the P2P communication.

The contactless IC card 220 can be realized by a card equipped with an antenna coil and an IC chip (which are not shown in the drawings). In the case that a user holds the contactless IC card 220 near to the NFC communication unit 104 of the wireless communication apparatus 100 which will be described later (in other words, the user brings the contactless IC card 220 close to the NFC communication unit 104 of the wireless communication apparatus 100), the IC chip acquires electric power by electromagnetic induction from a carrier wave transmitted from the NFC communication unit 104 of the wireless communication apparatus 100 through the antenna coil and operates by using the electric power. Further, the IC chip reads/write data from/to a memory in the IC chip according to a request from the wireless communication apparatus 100 obtained by demodulating the carrier wave.

Next, a hardware configuration of the wireless communication apparatus 100 according to the embodiment is described.

As shown in Fig. 1, the wireless communication apparatus 100 includes a control unit 101, a ROM (Read Only Memory) 102, a RAM (Random Access Memory) 103, an NFC communication unit 104, a display unit 105, and an input unit 106.

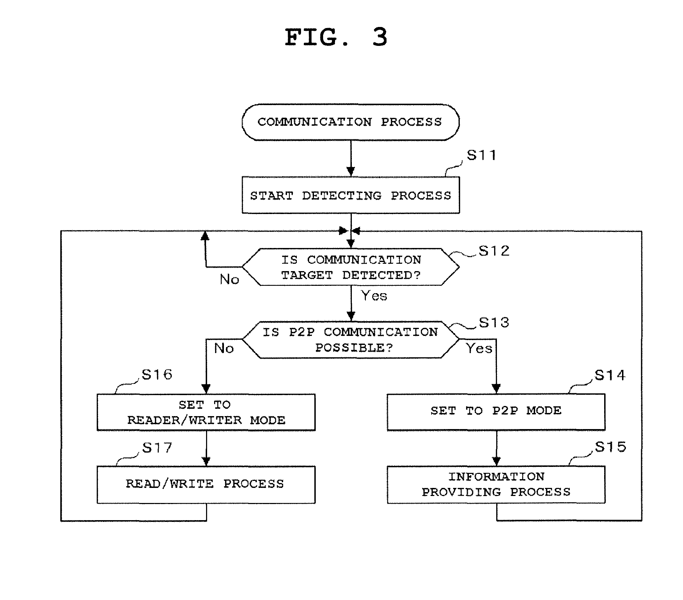

The control unit 101 includes a CPU (Central Processing Unit), for example. The control unit 101 executes software processing according to a program stored in the ROM 102 (for example, a program for realizing operations of the wireless communication apparatus 100 shown in Fig. 3 as will be described below) and, by this, controls various functions of the wireless communication apparatus 100.

The ROM 102 includes a non-volatile memory such as a flash memory. In the ROM 102, there are stored programs and/or data necessary for the control unit 101 to control various functions as described above.

The RAM 103 includes a volatile memory and can be used as a working area in which data necessary for the control unit 101 to execute various processes is stored temporarily.

The NFC communication unit 104 includes an interface for NFC communication. More specifically, the NFC communication unit 104 includes a coil antenna (not shown in the drawings) for generating magnetic flux by high-frequency current of 13.56MHz. The NFC communication unit 104 transmits a carrier wave by causing carrier current of 13.56MHz modulated by a signal to flow through the coil antenna. Further, the carrier wave transmitted from the NFC communication unit 104 generates mutually induced current in a coil antenna included in the communication target. It is also possible to transmit electric power to the coil antenna of the communication target by causing high current to flow through the coil antenna.

The display unit 105 includes an LCD (Liquid Crystal Display), an EL (Electroluminescence) display, or the like, for example. The display unit 105 displays an image according to an image signal output from the control unit 101.

The input unit 106 includes an input device such as a keyboard, a touch panel, a button, or the like. The input unit 106 receives an input manipulation and data corresponding to the input manipulation is output to the control unit 101.

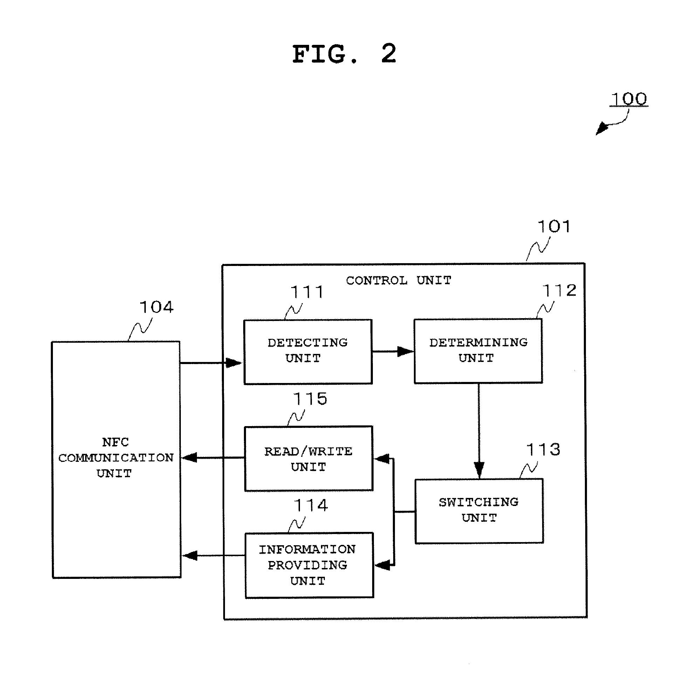

Next, a functional configuration of the control unit 101 of the wireless communication apparatus 100 according to the embodiment is described. As shown in Fig. 2, the control unit 101 functions as a detecting unit 111, a determining unit 112, a switching unit 113, an information providing unit 114, and a read/write unit 115.

The detecting unit 111 detects a communication target 200 which is near to the wireless communication apparatus 100. For example, the detecting unit 111 transmits carrier waves regularly and executes polling. In the case of receiving a response to the polling, the detecting unit 111 determines that there exists a communication target 200 near to the wireless communication apparatus 100.

The determining unit 112 determines whether or not the communication target 200 detected by the detecting unit 111 is capable of P2P communication with the wireless communication apparatus 100. More specifically, the determining unit 112 transmits a signal to the communication target 200 detected by the detecting unit 111 for inquiring about whether or not the communication target 200 is capable of P2P communication. Based on a response to the signal, the determining unit 112 determines whether or not P2P communication can be established between the communication target 200 and the wireless communication apparatus 100.

For example, the determining unit 112 analyzes the response from the communication target 200 to determine whether or not the communication target 200 is the contactless IC card 220. In the case of determining that the communication target 200 is the contactless IC card 220, the determining unit 112 determines that the communication target 200 is not capable of P2P communication. In the case of determining that the communication target 200 is not the contactless IC card 220, the determining unit 112 determines that the communication target 200 is capable of P2P communication (i.e. the communication target 200 is the mobile terminal 210). The determination on whether or not the communication target 200 is the contactless IC card 220 can be based on a response to an inquiry about whether or not the communication target 200 includes a display unit capable of displaying information acquired by P2P communication and/or an application program for processing the information, for example.

The switching unit 113 switches the operation mode of the wireless communication apparatus 100 based on the determination made by the determining unit 112. For example, in the case that the determining unit 112 determines that the communication target 200 is capable of P2P communication, the switching unit 113 switches the operation mode to the P2P mode. In the case that the determining unit 112 determines that the communication target 200 is not capable of P2P communication, the switching unit 113 switches the operation mode to the reader/writer mode.

The information providing unit 114 provides information to the mobile terminal 210 which is the communication target 200 detected by the detecting unit 111 in the case that the operation mode of the wireless communication apparatus 100 is the P2P mode. For example, the information providing unit 114 requests the mobile terminal 210 to launch an application such as a browser, mail software, or the like, and the user is presented with information provided by the information providing unit 114 by the launched application.

The read/write unit 115 executes reading/writing of information from/to the contactless IC card 220 which is the communication target 200 detected by the detecting unit 111 in the case that the operation mode of the wireless communication apparatus 100 is the reader/writer mode.

With reference to Fig. 3, operations of the wireless communication apparatus 100 according to the embodiment are described. Fig. 3 is a flow chart for showing an example of a communication process executed by the control unit 101 of the wireless communication apparatus 100 according to the embodiment. This communication process is performed by the control unit 101 which reads and executes programs stored in the ROM 102 in advance. Further, the control unit 101 of the wireless communication apparatus 100 starts the communication process shown in Fig. 3 with turn-on of the wireless communication apparatus 100, for example.

First, the detecting unit 111 starts a detecting process for detecting a communication target 200 which is near to the wireless communication apparatus 100 (Step S11).

The detecting unit 111 determines whether or not a communication target 200 which is near to the wireless communication apparatus 100 is detected (Step S12). Until it is determined that a communication target 200 is detected, the detecting unit 111 executes the detecting process repeatedly ("NO" at Step S12).

In the case that the detecting unit 111 determines that a communication target 200 near to the wireless communication apparatus 100 is detected ("YES" at Step S12), the determining unit 112 determines whether or not the detected communication target 200 is capable of P2P communication (Step S13). In the present embodiment, the determining unit 112 determines the type of the communication target 200 based on whether or not P2P communication can be established.

In the case that it is determined that the detected communication target 200 is capable of P2P communication ("YES" at Step S13), the determining unit 112 determines that the detected communication target 200 is the mobile terminal 210 and the switching unit 113 sets the operation mode of the wireless communication apparatus 100 to the P2P mode (Step S14).

Then, the information providing unit 114 executes an information providing process for providing the mobile terminal 210 which is the detected communication target 200 with information by P2P communication (Step S15). The information providing process is a process for transmitting instruction information for instructing the communication target 200 to launch a browser, mail software, or an application. After the information providing process is ended, the communication process returns to Step S12.

In the case that it is determined that the detected communication target 200 is not capable of P2P communication ("NO" at Step S13), the determining unit 112 determines that the detected communication target 200 is the contactless IC card 220 and the switching unit 113 sets the operation mode of the wireless communication apparatus 100 to the reader/writer mode (Step S16).

The read/write unit 115 executes a read/write process for reading/writing information from/to the contactless IC card 220 which is the detected communication target 200 (Step S17). After the read/write process is ended, the communication process returns to Step S12. By the communication process described above, it is possible to change the kinds of information to be transmitted to the communication target 200 based on the types of the communication target 200.

As described above, the wireless communication apparatus 100 determines whether or not the communication target near to it is capable of P2P communication. In the case that the communication target is capable of P2P communication, the wireless communication apparatus 100 switches the operation mode to the P2P mode. In the case that the communication target is not capable of P2P communication, the wireless communication apparatus 100 switches the operation mode to the reader/writer mode. Therefore, even in the case it cannot be recognized in advance which of the mobile terminal 210 and the contactless IC card 220 the communication target 200 is, the wireless communication apparatus 100 can switch to a proper operation mode corresponding to the communication target 200. Further, since the wireless communication apparatus 100 switches the operation mode based on whether or not the detected communication target 200 is capable of P2P communication, there is no necessity for the user to manually change the operation mode of the wireless communication apparatus 100 and it is possible to establish communication between the wireless communication apparatus 100 and the communication target 200 without delay.

Although the above described embodiments are configured to determine the type of the communication target 200 based on whether or not P2P communication is possible, the present invention is not limited to this configuration. In some embodiments, the type of the communication target 200 may be determined by different methods.

The wireless communication apparatus 100 of the present invention can be realized by using a conventional computer system as well as a dedicated apparatus. For example, the functions of the wireless communication apparatus 100 can be realized by a computer executing a program. The program for realizing the functions of the wireless communication apparatus 100 can be stored in a computer-readable recording medium such as a USB (Universal Serial Bus) memory, an SD (Secure Digital) memory card, a CD-ROM (Compact Disc Read Only Memory), a DVD (Digital Versatile Disc), a BD (Blu-Ray (Registered Trademark) Disc), a HDD (Hard Disk Drive), and the like, or can be downloaded through a network.

Although some embodiments of the present invention have been described above, the embodiments are for illustrative purposes only and not intended to limit the technical scope of the present invention. It will be evident that there are many other possible embodiments of the present invention and various modifications such as omission or substitution may be made without departing from the spirit of the invention. These embodiments and modifications fall within the scope and the spirit of the invention described in this specification and within the scope of the invention as defined in the appended claims and equivalents thereof.

## Claims

1. A wireless communication apparatus for executing wireless communication with a communication target comprising:
a detecting means for detecting the communication target which is near to the wireless communication apparatus;
a determining means for determining the type of the communication target detected by the detecting means; and
a switching means for switching an operation mode of the wireless communication apparatus to a mode corresponding to communication with the communication target based on the determination by the determining means.

2. The wireless communication apparatus of claim 1, wherein the determining means determines the type of the communication target based on whether or not the communication target detected by the detecting means is capable of bidirectional communication with the wireless communication apparatus.

3. The wireless communication apparatus of claim 1, wherein the determining means determines whether or not the communication target is capable of bidirectional communication with the wireless communication apparatus based on whether or not the communication target is a contactless IC (Integrated Circuit) card including an IC tag.

4. The wireless communication apparatus of one of claims 1 to 3, wherein the switching means switches the operation mode of the wireless communication apparatus to a first operation mode in which the wireless communication apparatus can execute bidirectional communication with the communication target in the case that the determining means determines that the communication target is capable of bidirectional communication with the wireless communication apparatus, and
the switching means switches the operation mode of the wireless communication apparatus to a second operation mode in which the wireless communication apparatus can read/write information from/to the communication target in the case that the determining means determines that the communication target is not capable of bidirectional communication with the wireless communication apparatus.

5. The wireless communication apparatus of one of claims 1 to 4, wherein the determining means determines that the communication target is capable of bidirectional communication with the wireless communication apparatus in the case that the communication target includes an application program for processing information provided from the wireless communication apparatus and a display unit for displaying the information.

6. The wireless communication apparatus of one of claims 1 to 5, wherein the switching means switches the kinds of information to be transmitted to the communication target based on the type of the communication target determined by the determining means.

7. A wireless communication method for controlling wireless communication between a wireless communication apparatus and a communication target comprising:
a detecting step of detecting the communication target which is near to the wireless communication apparatus;
a determining step of determining the type of the communication target detected at the detecting step; and
a switching step of switching an operation mode of the wireless communication apparatus to a mode corresponding to communication with the communication target based on the determination at the determining step.
